# EUROPÄISCHE PATENTSCHRIFT

(11) **EP 2 029 976 B1**
(45) Veröffentlichungstag und Bekanntmachung des Hinweises auf die Patenterteilung: **18.08.2010**
(21) Anmeldenummer: 07729441.1
(22) Anmeldetag: 23.05.2007
(51) Int. Cl.: G01F 5/00, G01F 1/684, G01F 15/12

(54) **MASSENSTROMSENSORVORRICHTUNG MIT EINEM STRÖMUNGSFÜHRENDEN KANAL**
MASS FLOW SENSOR DEVICE WITH A FLOW GUIDING CHANNEL
DÉTECTEUR DE FLUX MASSIQUE AVEC UN CANAL D'ÉCOULEMENT

(30) Priorität: 26.05.2006 DE 102006024745
(43) Veröffentlichungstag der Anmeldung: 04.03.2009
(73) Patentinhaber: Continental Automotive GmbH, 30165 Hannover (DE)
(72) Erfinder: HACKER-LEMIRE, Birgitta, 84069 Schierling (DE); HAUSCHEL, Jan-Erik, 99510 Apolda (DE); PESAHL, Stefan, 93342 Saal A.D.Donau (DE); SETESCAK, Stephen, 93080 Pentling (DE); STEUBER, Frank, 93077 Bad Abbach (DE)
(86) Internationale Anmeldenummer: PCT/EP2007/055004
(87) Internationale Veröffentlichungsnummer: WO 2007/137978

(56) Entgegenhaltungen:
- WO-A-01/75402
- DE-A1- 10 011 709
- DE-A1- 10 154 253
- DE-A1- 19 815 654

## Beschreibung

Die Erfindung betrifft eine Massenstromsensorvorrichtung. Derartige Massenstromsensorvorrichtungen sind geeignet zum Erfassen eines Massenstroms in einem Hauptkanal. Ein derartiger Hauptkanal kann beispielsweise ein Ansaugtrakt einer Brennkraftmaschine sein. Abhängig von dem durch die Massenstromsensorvorrichtung erfassen Massenstrom kann eine Steuerung beispielsweise einer Brennkraftmaschine erfolgen oder auch Diagnosen durchgeführt werden. Zu diesen Zwecken ist ein auch unter unterschiedlichen Betriebsbedingungen zuverlässiges und möglichst präzises Erfassen des tatsächlichen Massenstroms wichtig.

Aus der DE 100 11 709 A1 ist eine Massenstromsensorvorrichtung bekannt, die in einem Haupt kanal angeordnet ist und der ein koaxial zu dem Hauptkanal zugeordneter Rohrkörper zugeordnet ist.

Entsprechende Massenstromsensorvorrichtungen mit zumindest einem parallel zu einer Hauptströmungsrichtung in dem Hauptkanal angeordneten Rohrkörper sind auch aus der DE 100 355 43 A1 und der DE 197 35 664 A1 bekannt.

Aus der DE 101 54 253 A1 ist eine Massenstromsensorvorrichtung bekannt mit einem flügelförmigen Schirmkörper, der den Luftmassensensor gegen Partikel abschirmt und ihm Luft von der Rohraußenwand her zuführt. Hier erfolgt somit eine asymmetrische Entnahme des Massenstroms in dem Hauptkanal.

Aus der DE 100 11 709 A1 ist eine Vorrichtung zum Bestimmen eines Volumenstroms eines in einer Leitung strömenden Mediums in Form eines Gas-Flüssigkeits-Festkörperpartikelgemisches bekannt. In einer Leitung ist ein von dem strömenden Medium umströmtes Messelement angeordnet. Die Vorrichtung hat ein zumindest teilweise stromaufwärts des Messelementes innerhalb der Leitung angeordnetes Schutzgitter, das zumindest einen Kanal hat, der das in der Hauptströmungsrichtung strömende Medium stromabwärts hinter dem Schutzgitter teilweise umlenkt. Das Schutzgitter hat zumindest eine Seitenwand mit zumindest zwei Abschnitten, die zumindest einen voreinander verschiedenen Winkel mit der Strömungsrichtung bilden.

Die Aufgabe der Erfindung ist, eine Massenstromsensorvorrichtung zu schaffen, die präzise und zuverlässig betreibbar ist.

Aus der DE 101 54 253 A1 ist eine Vorrichtung mit einem Luftansaugrohr bekannt und einer darin in radialer Richtung eingesteckten Luftmassensensoranordnung, deren Einlassöffnung senkrecht zur Luftströmungsrichtung im Ansaugrohr orientiert ist. Vor der Einlassöffnung ist ein flügelförmiger Schirmkörper derart angeordnet, dass er einerseits die Einlassöffnung verdecks und andererseits eine nichtabreißende Luftströmung zur Einlassöffnung sicherstellt und seine quer zur Strömungsrichtung der über seine Oberfläche strömende Luft verlaufende, im Wesentlichen geradlinige Oberfläche senkrecht zur Einsteckrichtung der Luftmassensensoranordnung orientiert ist.

Aus der DE 198 15 654 A1 ist eine Messvorrichtung zum Messen der Masse eines in einer Leitung strömenden Mediums bekannt. Sie weist ein von dem strömenden Medium umströmtes Messelement auf, das in einem in der Leitung vorgesehenen Strömungskanal der Messvorrichtung angeordnet ist. Der Strömungskanal erstreckt sich zwischen einer mit der Leitung verbundenen Einlassöffnung und zumindest einer stromabwärts der Einlassöffnung in die Leitung mündenden Auslassöffnung entlang einer Hauptströmungsrichtung. Der Strömungskanal verzweigt sich an einer zwischen der Einlassöffnung und dem Messelement angeordneten Trennstelle in einen Messkanal, in welchen das Messelement angeordnet ist und einen ersten Umgehungskanal, welcher das Messelement in der Hauptströmungsrichtung umgeht.

Die Aufgabe wird gelöst durch die Merkmale des Patentanspruchs 1. Vorteilhafte Ausgestaltungen der Erfindung sind in den Unteransprüchen gekennzeichnet.

Die Erfindung zeichnet sich aus durch eine Massenstromsensorvorrichtung für eine zumindest partielle Anordnung in einem Hauptkanal, in dem ein Massenstrom in einer Hauptströmungsrichtung strömt. Die Massenstromsensorvorrichtung weist einen Massenstromsensor auf mit einem Bypasskanal, der einen Einlass aufweist, über den Massenstrom aus dem Hauptkanal in den Bypasskanal einströmen kann. Der Massenstromsensor hat ferner zumindest ein Massenstromsensorelement, mittels dessen eine für den Massenstrom in den Bypasskanal charakteristische Größe erfasst werden kann. Ein strömungsführender Kanal ist vorgesehen, dessen bezüglich der Hauptströmungsrichtung senkrecht verlaufender Einlassquerschnitt mit dessen bezüglich der Hauptströmungsrichtung senkrecht verlaufendem Auslassquerschnitt eine maximale Überlappung von einem Drittel bezogen auf den Einlassquerschnitt aufweisen. Dabei bezieht sich die maximale Überlappung auf die jeweilige Projektion der Einlass- und Auslassquerschnitte aufeinander. Der Einlassquerschnitt ist im Wesentlichen mittig in dem Hauptkanal angeordnet. Der strömungsführende Kanal ist derart ausgebildet und angeordnet, dass er in ihm strömendes Medium zumindest teilweise zu dem Einlass des Massenstromsensors leitet und zumindest eine Ausnehmung hin zu dem Hauptkanal hat, über die eine Kommunikation mit dem Hauptkanal unter Umgehung des Bypasskanals erfolgt. Diese Ausnehmung kann beispielsweise außerhalb des Bereichs der Überlappung oder in dem Bereich seines Auslassquerschnittes ausgebildet sein. Insbesondere ist der Auslassquerschnitt dem Einlass des Bypasskanals in Hauptströmungsrichtung vorgelagert und gegebenenfalls separat von dem Einlass ausgebildet. Besonders vorteilhaft überlappen die Einlass- und Auslassquerschnitte gar nicht.

Durch den strömungsführenden Kanal im Zusammenhang mit der zumindest einen Ausnehmung kann so einfach sichergestellt werden, dass in dem strömenden Medium befindliche Partikel, wie z. B. Staub oder auch Wassertropfen mittels Fliehkraftabscheidung an einer Wandung des strömungsführenden Kanals zu einem großen Teil abgeschieden werden und über die zumindest eine Ausnehmung in den Hauptkanal unter Umgehung des Bypasskanals abgeführt werden. Dies hat zur Folge, dass das Messverhalten des Sensorelements von diesen Partikeln dann unbeeinflusst ist und somit sehr präzise sein kann und auch zuverlässig sein kann.

Darüber hinaus erlaubt die im Wesentlichen mittige Entnahme des Massenstroms für das Zuführen zu dem Bypasskanal ein sehr robuste Erfassen des Massenstroms in dem Hauptkanal, insbesondere auch bei inhomogenen Strömungsprofilen in dem Hauptkanal, wie es in der Regel direkt stromabwärts nach Luftfiltern beilspielsweise der Fall ist. Dadurch kann auch eine Abhängigkeit des Messsignals des Massenstromsensorelements von einem Einbauwinkel bezogen auf den Rohrquerschnitt des Hauptkanals deutlich verringert sein.

Dem strömungsführenden Kanal ist eine Halterung für eine Fixierung in dem Hauptkanal zugeordnet, die so ausgebildet ist, dass sie den Massenstromsensor von der Strömung in dem Hauptkanal in einem in Bezug auf die Hauptströmungsrichtung stirnseitigen Bereich des Massenstromsensors abschirmt. Auf dies Weise kann beispielsweise sehr wirkungsvoll ein Eindringen unerwünschter Partikel, wie beispielsweise Wassertropfen, entlang beispielsweise eines Gehäuses des Massenstromsensors verhindert werden, was ansonsten beispielsweise mittels eines Kriechprozesses erfolgen kann. Die Halterung kann in diesem Zusammenhang insbesondere auch strömungsgünstig und damit druckverlustmindernd vorteilhaft ausgebildet sein.

Gemäß einer vorteilhaften Ausgestaltung weist der strömungsführende Kanal eine Rohrlängsachse auf, die verkippt ist gegenüber der Hauptströmungsrichtung. Auf diese Weise kann der strömungsführende Kanal besonders einfach realisiert werden.

Gemäß einer weiteren vorteilhaften Ausgestaltung der Erfindung weist die Halterung eine Ausnehmung auf, durch die strömendes Medium hin zu einem Temperatursensorelement geleitet wird, das zum Erfassen der Temperatur des strömenden Mediums in dem Massenstromsensor vorgesehen ist. Auf diese Weise kann, insbesondere im Zusammenhang mit der Schirmwirkung, ein präzises und weitgehend veriögerungsfreies Erfassen der Temperatur des strömenden Mediums erfolgen.

Gemäß einer weiteren vorteilhaften Ausgestaltung ist der bezüglich des stirnseitigen Bereichs des Massenstromsensors abschirmend wirkende Abschnitt der Halterung in Hauptströmungrichtung zunächst als schmaler Steg ausgebildet. Ein nicht abschirmender Abschnitt der Halterung ist zumindest in einem T6ilbereich der Hauptströmungsrichtung bezogen auf den sähmalen Steg des abschirmend wirkenden Abschnitts verbreitert zu diesem ausgebildet. Auf diese Weise kann auch bei einer asymmetrischen Ausbildung der Halterung eine gute Strömungsteilereigenschaft erreicht werden, die einer symmetrischen Ausbildung nahe kommt.

Gemäß einer weiteren vorteilhaften Ausgestaltung der Erfindung ist der strömungsführende Kanal S-förmig ausgebildet. Auf diese Weise können etwaige Strömungsablösungen gut vermieden werden.

Gemäß einer weiteren vorteilhaften Ausgestaltung der Erfindung ist der strömuhgsführende Kanal so ausgebildet, dass sich sein Querschnitt in strömungsrichtung verringert. Auf diese Weise können einfach stabile Strömungsverhältnisse durch ein Beschleunigen der Strömung erreicht werden.

Gemäß einer weiteren vorteilhaften Ausgestaltung sind in der Wandung des strömungsführenden Kanals Führungskonturen vorgesehen. Dies hat den Vorteil, dass die abzuführenden Partikel, insbesondere Wassertropfen und dergleichen, gezielt geführt werden können.

Gemäß einer weiteren vorteilhaften Ausgestaltung der Erfindung ist der strömungsführende Kanal als Spritzteil einstückig mit dem Hauptkanal hergestellt. Auf diese Weise kann die Massenstromsensorvorrichtung besonders kostengünstig hergestellt werden.

Ausführungsbeispiele der Erfindung sind im Folgenden anhand der schematischen Zeichnungen näher erläutert. Es zeigen:
- Figur 1: einen ersten Längsquerschnitt durch eine erste Aus- führungsform der Massenstromsensorvorrichtung,
- Figur 2: einen zweiten Längsquerschnitt durch die erste Aus- führungsform der Massenstromsensorvorrichtung senk- recht zu dem Längsschnitt gemäß der Figur 1,
- Figur 3: einen Querschnitt durch einen Hauptkanal der ersten Ausführungsform der Massenstromsensorvorrichtung und

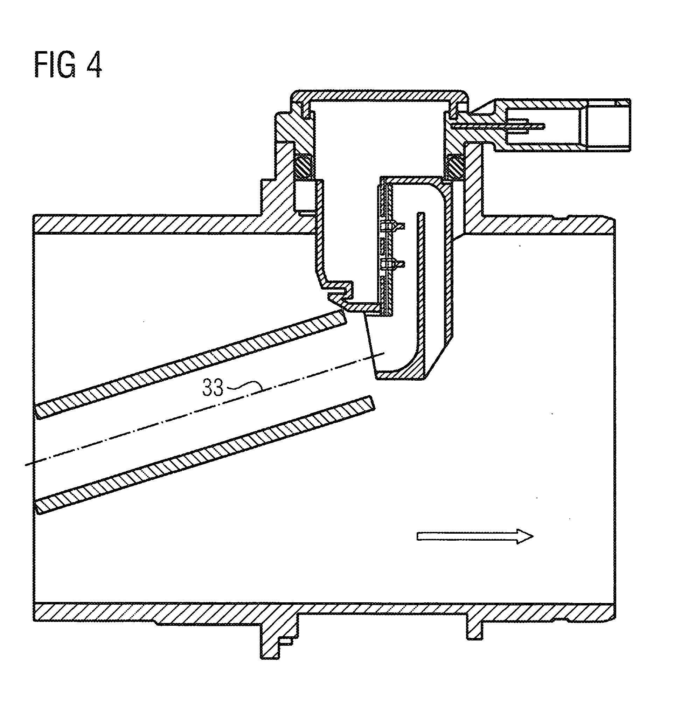

- Figur 4: einen Längsquerschnitt durch eine zweite Ausfüh- rungsform der Massenstromsensorvorrichtung.

Elemente gleicher Konstruktion oder Funktion sind figurenübergreifend mit den gleichen Bezugszeichen gekennzeichnet. Eine Massenstromsensorvorrichtung ist dazu vorgesehen, zumindest partiell in einem Hauptkanal 2 angeordnet zu sein. Bei dem bestimmungsgemäßen Betrieb der Massenstromsensorvorrichtung ist diese zumindest partiell in dem Hauptkanal angeordnet. Sie kann den Hauptkanal auch umfassen, muss es jedoch nicht.

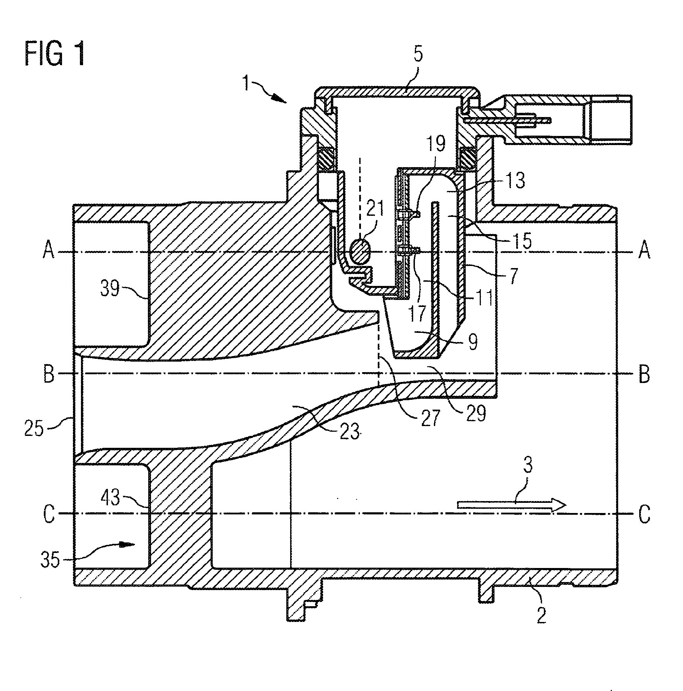

Die Massenstromsensorvorrichtung (Figur 1) umfasst einen Massenstromsensor, der zumindest partiell in dem Hauptkanal 2 angeordnet ist. In Figur 1 ist dargestellt, dass ein Teil des Massenstromsensors 1 in den Hauptkanal 2 hineinragt. Mit dem Pfeil 3 ist die Hauptströmungsrichtung des in dem Hauptkanal strömenden Mediums bezeichnet. In der Regel handelt es sich bei diesem Medium um Luft, in der gegebenenfalls auch Partikel in fester oder flüssiger Form, wie beispielsweise Staub oder Wassertropfen enthalten sein können.

Der Massenstromsensor 1 hat ein Gehäuse 5, in dem ein Bypasskanal 7 ausgebildet ist. Der Bypasskanal 7 hat einen Einlassabschnitt 9, einen senkrecht zu der Hauptströmungsrichtung ausgebildeten ersten Bypasskanalabschnitt 11, einen parallel zu der Hauptströmungsrichtung 3 ausgebildeten zweiten Bypasskanalabschnitt 13 und einen erneut senkrecht zu der Hauptströmungsrichtung ausgebildeten dritten Bypasskanalabschnitt 15.

In dem Bypasskanal sind ferner Massenstromsensorelemente 17, 19 angeordnet, die bevorzugt temperaturabhängige Widerstände umfassen, die in Form einer Wheatstone schen Messbrücke bevorzugt miteinander verschaltet sind nach dem Prinzip eines Anemometers.

Ferner ist bevorzugt dem Massenstromsensor 1 auch ein Temperatursensor 21 zugeordnet, der bevorzugt in Pillenform ausgebildet ist und zum Erfassen der Temperatur des in dem Hauptkanal 2 strömenden Mediums vorgesehen ist.

Dem Massenstromsensor 1 und insbesondere dem Einlassabschnitt 9 des Bypasskanals 7 ist ferner ein strömungsführender Kanal 23 in Hauptströmungsrichtung vorgelagert. Der strömungsführende Kanal 23 ist so ausgebildet, dass sein bezüglich der Hauptströmungsrichtung 3 senkrecht verlaufender Einlassquerschnitt 25 mit dessen bezüglich der Hauptströmungsrichtung 23 senkrecht verlaufendem Auslassquerschnitt 27 eine maximale Überlappung von einem Drittel bezogen auf den Einlassquerschnitt 23 aufweist. Der Einlassquerschnitt 25 ist im Wesentlichen mittig dem Hauptkanal 2 angeordnet. Der strömungsführende Kanal 23 ist derart ausgebildet und angeordnet, dass er in ihm strömendes Medium zumindest teilweise zu dem Einlassabschnitt 9 des Massenstromsensors 1 leitet und zumindest eine Ausnehmung 29 hin zu dem Hauptkanal 1 hat, über die eine Kommunikation mit dem Hauptkanal 1 unter Umgehung des Bypasskanals 7 erfolgt. In dem Ausführungsbeispiel der Figur 1 ist die Ausnehmung in dem Bereich des Auslassquerschnitts 27 ausgebildet. Zusätzlich oder alternativ können jedoch auch stromaufwärts dazu in der Wandung des strömungsführenden Kanals eine oder mehrere entsprechende Ausnehmungen vorgesehen sein.

Der strömungsführende Kanal 23 ist mittels einer Halterung 35 in dem Hauptkanal 2 fixiert. Bevorzugt ist der strömungsführende Kanal 23 mit seiner Halterung 35 einstückig durch Spritzgießen mit dem Hauptkanal 2 hergestellt.

Die Halterung 35 kann jedoch auch als separates Teil von dem Hauptkanal 2 ausgebildet sein.

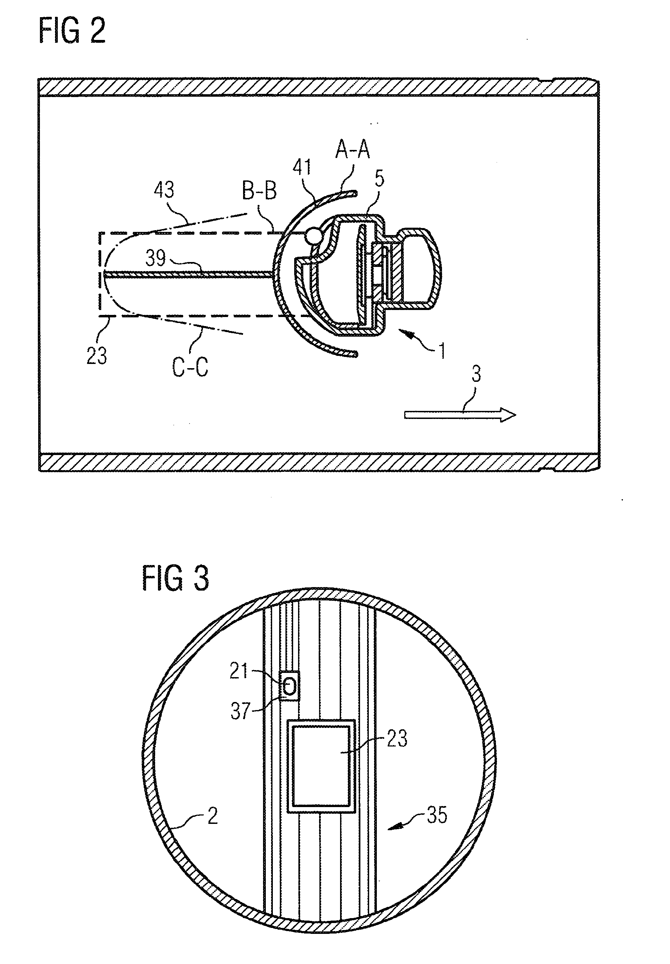

In der Halterung ist bevorzugt eine Ausnehmung 37 (Figur 3) vorgesehen, durch die strömendes Medium hin zu dem Temperatursensorelement 21 geführt wird.

Die Halterung hat bevorzugt einen ersten Steg 39 und einen zweiten Steg 43. In der Figur 2 ist ein Längsschnitt senkrecht zu der Schnittrichtung gemäß der Figur 1 dargestellt, wobei relevante Bereiche in mehreren Schnittebenen dargestellt sind, die durch A-A, B-B und C-C gekennzeichnet sind. Der erste Steg 39 ist in Hauptströmungsrichtung zunächst als ein sehr schmaler Steg ausgebildet und ist dann stromabwärts zu einem Schirmkörper 41 erweitert. Der Schirmkörper 41 ist vorzugsweise so ausgebildet, dass er einen Teilbereich oder einen Großteil des Gehäuses 5 des Massenstromsensors 1 von der Strömung in dem Hauptkanal 2 abschirmt. Der zweite Steg 43 der Halterung 35 hat bevorzugt die in der Figur 2 dargestellte Kontur (siehe Schnittebene C-C). Auf diese Weise kann durch die vorgelagerte Verbreiterung in Hauptströmungsrichtung 3 des zweiten Stegs 43 im Vergleich zu dem ersten Steg 39 eine besonders günstige Strömungsteilereigenschaft erreicht werden, die angenähert ist an eine symmetrische Ausbildung des ersten und zweiten Stegs 39, 43.

Bevorzugt ist der strömungsführende Kanal 23 S-förmig ausgebildet. Ferner ist in der Figur 1 auch erkennbar, dass sich der strömungsführende Kanal 23 entlang der Hauptströmungsrichtung 3 bezüglich seines Querschnittes in der Strömungsrichtung des Mediums innerhalb des strömungsführenden Kanals 23 verringert. Alternativ kann der Querschnitt jedoch auch beispielsweise gleich bleiben.

Bevorzugt sind in der Wandung des strömungsführenden Kanals Führungskonturen vorgesehen, mittels derer durch Fliehkraftabscheidung abgeschiedene Partikel, insbesondere Wassertropfen oder auch Öltropfen, gezielt an der Wandung entlang und zwar hin zu der mindestens einen Ausnehmung 29 des strömungsführenden Kanals 23 geführt sind und so diese Partikel gezielt von den Massenstromsensorelementen 17, 19 ferngehalten werden können.

## Patentansprüche

1. Massenstromsensorvorrichtung für eine zumindest partielle Anordnung in einem Hauptkanal (2), in dem ein Massenstrom in einer Hauptströmungsrichtung (3) strömt, die aufweist einen Massenstromsensor (1) mit einem Bypasskanal (7), der einen Einlassabschnitt (9) aufweist, über den der Massenstrom aus dem Hauptkanal (2) in den Bypasskanal (7) einströmen kann, und mit zumindest einem Massenstromsensorelement (17, 19), mittels dessen eine für den Massenstrom in dem Hauptkanal (2) charakteristische Größe erfasst werden kann, wobei ein strömungsführender Kanal (23) vorgesehen ist mit einem bezüglich der Hauptströmungsrichtung (3) senkrecht verlaufenden Einlässquerschnitt (25) und einem bezüglich der Hauptströmungsrichtung (3) senkrecht verlaufenden Auslassquerschnitt (27), wobei der strömungsführende Kanal (23) derart ausgebildet und angeordnet ist, dass er in ihm strömendes Medium teilweise zu dem Einlassabschnitt (9) des Bypasskanals (7) leitet und zumindest eine Ausnehmung (29) hin zu dem Hauptkanal (2) hat, über die eine Kommunikation mit dem Hauptkanal (2) unter Umgehung des Bypasskanals (7) erfolgt, wobei der Einlassquerschnitt (25) mit dem Auslassquerschnitt (27) eine maximale Überlappung von einem Drittel bezogen auf den Einlässquerschnitt aufweist, **dadurch gekennzeichnet, dass** der Einlassquerschnitt (25) im Wesentlichen mittig in dem Hauptkanal (2) angeordnet ist und der strömungsführende Kanal (23) und die zumindest eine Ausnehmung (29) so ausgebildet sind, dass in dem strömenden Medium befindliche Partikel mittels Fliehkraftabscheidung an einer Wandung des strömungsführenden Kanals (23) zu einem großen Teil abgeschieden werden und über die zumindest eine Ausnehmung (29) in den Hauptkanal (2) unter Umgehung des Bypasskanals (7) abgeführt werden, dass bei dem strömungsführenden Kanal (23) eine Halterung (35) für eine Fixierung in dem Hauptkanal (2) zugeordnet ist, die so ausgebildet ist, dass sie den Massenstromsensor (1) von der Strömung in dem Hauptkanal (2) in einem in Bezug auf die Hauptströmungsrichtung (3) stirnseitigen Bereich des Massenstromsensors (1) abschirmt.

2. Massenstromsensorvorrichtung nach Anspruch 1, bei der der strömungsführende Kanal (23) eine Rohrlängsachse (33) aufweist, die verkippt ist gegenüber der Hauptströmungsrichdung (3).

3. Massenstromsensorvorrichtung nach einem der vorstehenden Ansprüche, bei dem die Halterung (35) eine Ausnehmung (37) aufweist, durch die strömendes Medium hin zu einem Temperatursensorelement (21) geleitet wird, das zum Erfassen der Temperatur des strömenden Mediums in dem Massenstromsensor (1) vorgesehen ist.

4. Massenstromsensorvorrichtung nach einem der vorstehenden Ansprüche, bei der der bezüglich des stirnseitigen Bereichs des Massenstromsensors (1) abschirmend wirkende Abschnitt der Halterung (35) in Hauptströmungsrichtung (3) zunächst als schmaler Steg ausgebildet ist und ein nicht abschirmender Abschnitt der Halterung (35) zumindest in einem Teilbereich der Hauptströmungsrichtung (3) bezogen auf den schmalen Steg verbreitert zu diesem ausgebildet ist.

5. Massenstromsensorvorrichtung nach einem der vorstehenden Ansprüche, bei dem der strömungsführende Kanal (23) S-förmig ausgebildet ist.

6. Massenstromsensorvorrichtung nach einem der vorstehenden Ansprüche, bei dem der strömungsführende Kanal (23) so ausgebildet ist, dass sich sein Querschnitt in Strömungsrichtung verringert.

7. Massenstromsensorvorrichtung nach einem der vorstehenden Ansprüche, bei der in der Wandung des strömungsführenden Kanals (23) Führungskonturen vorgesehen sind.

8. Massenstromsensorvorrichtung nach einem der vorstehenden Ansprüche, bei dem der Hauptkanal und der strömungsführende Kanal als einstückiges Spritzteil ausgebildet sind.

## Claims

1. Mass flow sensor device for at least partial arrangement in a main channel (2) in which a mass flow flows in a main flow direction (3), which mass flow sensor device has a mass flow sensor (1) with a bypass channel (7) which has an inlet section (9) via which the mass flow can flow out of the main channel (2) into the bypass channel (7) and having at least one mass flow sensor element (17, 19) by means of which a variable which is characteristic of the mass flow in the main channel (2) can be sensed, wherein a flow guiding channel (23) is provided with an inlet cross section (25), which runs perpendicularly with respect to the main flow direction (3), and an outlet cross section (27), which runs perpendicularly with respect to the main flow direction (3), wherein the flow guiding channel (23) is embodied and arranged in such a way that said channel directs some of the medium flowing into it to the inlet section (9) of the bypass channel (7), and has at least one cutout (29) toward the main channel (2), via which cutout communication occurs with the main channel (2) by bypassing the bypass channel (7), the inlet cross section (25) having, with the outlet cross section (27), a maximum overlap of a third with respect to the inlet cross section, **characterized in that** the inlet cross section (25) is arranged essentially centrally in the main channel (2), and the flow guiding channel (23) and the at least one recess (29) are embodied in such a way that particles located in the flowing medium are to a large extent separated off at a wall of the flow guiding channel (23) by means of centrifugal force separation, and said particles are carried away via the at least one cutout (29) into the main channel (2) by bypassing the bypass channel (7), **in that**, in the case of the flow guiding channel (23), a fastener (35) for securement in the main channel (2) is assigned and is embodied in such a way that it shields the mass flow sensor (1) from the flow in the main channel (2) in a region of the mass flow sensor (1) which is at the end side with respect to the main flow direction (3).

2. Mass flow sensor device as claimed in Claim 1, in which the flow guiding channel (23) has a pipe longitudinal axis (33) which is tilted with respect to the main flow direction (3).

3. Mass flow sensor device as claimed in one of the preceding claims, in which the fastener (35) has a cutout (37), medium flowing through which is directed to a temperature sensor element (21) which is provided for sensing the temperature of the flowing medium in the mass flow sensor (1).

4. Mass flow sensor device as claimed in one of the preceding claims, in which the section of the fastener (35) which has a shielding effect with respect to the end side region of the mass flow sensor (1) is embodied first, in the main flow direction (3), as a narrow web, and a non-shielding section of the fastener (35) is embodied so as to widen in relation to the narrow web, at least in part of the main flow direction (3) with respect to said narrow web.

5. Mass flow sensor device as claimed in one of the preceding claims, in which the flow guiding channel (23) is embodied in an S shape.

6. Mass flow sensor device as claimed in one of the preceding claims, in which the flow guiding channel (23) is embodied in such a way that its cross section decreases in the flow direction.

7. Mass flow sensor device as claimed in one of the preceding claims, in which guide contours are provided in the wall of the flow guiding channel (23).

8. Mass flow sensor device as claimed in one of the preceding claims, in which the main channel and the flow guiding channel are embodied as a single injection molded component.

## Revendications

1. Système de détection d'un flux massique, ledit système étant destiné à être placé au moins partiellement dans un canal principal (2), dans lequel circule un flux massique dans une direction principale (3) du flux, ledit système de détection comportant un détecteur de flux massique (1) avec un canal de dérivation (7) qui a une section alimentation (9), à travers laquelle le flux massique peut circuler du canal principal (2) dans le canal de dérivation (7), et avec au moins un élément détecteur de flux massique (17, 19) au moyen duquel il est possible de détecter une grandeur caractéristique pour le flux massique dans le canal principal (2), alors qu'il est prévu un canal d'écoulement (23) avec une section transversale d'alimentation (25) se développant perpendiculairement à la direction principale (3) du flux et une section transversale de sortie (27) se développant perpendiculairement à la direction principale (3) du flux, le canal d'écoulement (23) étant conçu et placé de telle sorte qu'il conduit un fluide qui s'y engage en partie vers la section transversale d'alimentation (9) du canal de dérivation (7) et ayant au moins un évidement (29) vers le canal principal (2) à travers lequel a lieu une communication avec le canal principal (2) en contournant le canal de dérivation (7), la section transversale d'alimentation (25) ayant avec la section transversale de sortie (27) un chevauchement maximum d'un tiers par comparaison avec la section transversale d'alimentation (25), **caractérisé par le fait que** la section transversale d'alimentation (25) est placée essentiellement au milieu dans le canal principal (2) et que le canal d'écoulement (23) et le au moins un évidement (29) sont conçus de telle manière que des particules se trouvant dans le fluide en circulation sont isolées en grande partie par précipitation à force centrifuge sur une paroi du canal d'écoulement (23) et sont évacuées à travers le au moins un évidement (29) dans le canal principal (2) en contournant le canal de dérivation (7), que, au niveau du canal d'écoulement (23), il est prévu un support (35) pour une fixation dans le canal principal (2), lequel support est conçu de manière telle qu'il protège le détecteur de flux massique (1) du flux dans le canal principal (2) dans une zone du détecteur de flux massique (1) se trouvant du côté frontal par rapport à la direction principale (3) de l'écoulement.

2. Système de détection de flux massique selon la revendication 1, dans lequel le canal d'écoulement (23) comporte un axe longitudinal du tube (33) incliné par rapport à la direction principale (3) de l'écoulement.

3. Système de détection de flux massique selon l'une des revendications précédentes, dans lequel le support (35) a un évidement (37) à travers lequel du fluide en circulation est conduit vers un élément détecteur de température (21), prévu pour détecter la température du fluide en circulation dans le système de détection de flux massique (1).

4. Système de détection de flux massique selon l'une des revendications précédentes, dans lequel la partie du support (35) agissant comme protection par rapport à la zone située du côté frontal du détecteur de flux massique (1) dans la direction principale (3) de l'écoulement est conçue d'abord sous forme de barre étroite et une partie non protectrice du support (35) est conçue, au moins dans une zone partielle de la direction principale (3) de l'écoulement, plus large par comparaison à la barre étroite.

5. Système de détection de flux massique selon l'une des revendications précédentes, dans lequel le canal d'écoulement (23) a la forme d'un S.

6. Système de détection de flux massique selon l'une des revendications précédentes, dans lequel le canal d'écoulement (23) est conçu de manière telle que sa section transversale diminue dans la direction du flux.

7. Système de détection de flux massique selon l'une des revendications précédentes, dans lequel des contours de guidage sont prévus dans la paroi du canal d'écoulement (23).

8. Système de détection de flux massique selon l'une des revendications précédentes, dans lequel le canal principal et le canal d'écoulement sont conçus sous la forme d'une seule pièce fabriquée par injection.
